# EUROPEAN PATENT APPLICATION

(11) **EP 4 778 395 A1**
(43) Date of publication of application: **22.07.2026**
(21) Application number: 25152822.0
(22) Date of filing: 20.01.2025
(51) Int. Cl.: A21D 2/36, A21D 13/043, A21D 13/045, A21D 13/066, A21D 13/22, A23L 11/00, A23L 19/12, A23L 19/18

(54) **PRE-FRIED CHICKPEA-POTATO PRODUCT AND METHOD FOR PREPARING THE SAME**

(71) Applicant: Greiwe, David, 48607 Ochtrup (DE)
(72) Inventor: Greiwe, David, 48607 Ochtrup (DE)
(74) Representative: Michalski Hüttermann & Partner mbB

(57) **Abstract**

The invention provides pre-fried chickpea-potato product, comprising:
a dough mixture including peeled, cooked chickpeas and cooked potatoes, wherein the chickpeas and potatoes are ground to form a dough,
a liquid coating comprising water and chickpea flour, and
a dry coating comprising ground cornflakes,
wherein the dough is formed into a dough piece with a predefined shape,
the dough piece is coated with the liquid coating and the dry coating and
the coated dough piece is pre-fried such that it comprises a crust the color of which is darker than the color of the cornflakes before frying.

In this way, a food product and a method for preparing the same are provided that address the challenges for healthy food which is easy to prepare.

## Description

The present invention relates to a pre-fried chickpea-potato product and a method for preparing the same. More specifically, the invention provides a nutritious and convenient food product made from a plant-based dough, coated and pre-fried to achieve a crispy exterior, and designed for easy storage, distribution, and preparation. The invention further relates to methods of processing, coating, pre-frying, and packaging the product to maintain its texture, flavor, and quality.

In today's fast-paced world, the demand for food that is both nutritious and convenient has reached unprecedented levels. Modern consumers are increasingly health-conscious, seeking foods that support their well-being while fitting seamlessly into their busy lifestyles. The growing awareness of the link between diet and health has led to a shift in preferences toward natural, wholesome ingredients that provide essential nutrients without compromising taste or ease of preparation. As people become more informed about the importance of balanced diets, they look for food options that are rich in plant-based proteins, dietary fiber, vitamins, and minerals, while minimizing unhealthy additives such as artificial preservatives, trans fats, and excessive sodium.

A significant challenge in the food industry today is addressing the growing prevalence of food allergies and dietary restrictions. Gluten intolerance, nut allergies, lactose intolerance, and other food sensitivities have become increasingly common, prompting consumers to carefully scrutinize ingredient lists to ensure their dietary needs are met. As a result, food manufacturers are under pressure to develop allergen-free alternatives that cater to a wider audience without sacrificing flavor, texture, or convenience. This demand has given rise to innovative formulations using naturally gluten-free, plant-based ingredients such as chickpeas and potatoes, which not only offer nutritional benefits but also provide excellent texture and taste profiles for a variety of dishes.

Furthermore, the modern lifestyle, characterized by hectic work schedules and on-the-go routines, necessitates food products that are easy to store, quick to prepare, and suitable for a variety of cooking methods. Consumers expect ready-to-eat or minimally prepared food solutions that can be conveniently heated, fried, or baked within minutes, without the need for complex cooking processes. The increasing popularity of frozen food items highlights the need for products that retain their nutritional value and taste while offering long shelf life and minimal preparation time.

Ultimately, the future of modern food lies in the development of products that not only satisfy taste and convenience but also promote overall well-being, accommodate dietary restrictions, and support a sustainable, health-conscious lifestyle. With rising consumer expectations, food innovations must continue to evolve, providing delicious, nutritious, and accessible options for individuals and families worldwide.

Therefore, it is the object of the invention to provide a food product and a method for preparing the same that address above-mentioned challenges.

This object is addressed by the subject matter of the independent claims. Embodiments of the invention are described in the dependent claims.

Therefore, the invention provides a pre-fried chickpea-potato product, comprising:
a dough mixture including peeled, cooked chickpeas and cooked potatoes, wherein the chickpeas and potatoes are ground to form a dough,
a liquid coating comprising water and chickpea flour, and a dry coating comprising ground cornflakes,
wherein the dough is formed into a dough piece,
the dough piece is coated with the liquid coating and the dry coating and
the coated dough piece is pre-fried such that it comprises a crust the color of which is darker than the color of the cornflakes before frying.

The invention provides a pre-fried chickpea-potato product that offers a nutritious and convenient food option suitable for modern dietary preferences. The product comprises a dough mixture that includes peeled, cooked chickpeas and cooked potatoes. The peeling of the chickpeas plays a crucial role in enhancing the texture and overall quality of the final product. By removing the outer skin of the chickpeas, the resulting dough achieves a smoother and more homogeneous consistency, which improves the mouthfeel and prevents a grainy or rough texture. Additionally, peeled chickpeas contribute to better binding properties, allowing the dough to hold its shape more effectively during processing, coating, and frying. This not only results in a more uniform product but also enhances the overall sensory experience by providing a delicate, non-fibrous texture.

Further, the invention addresses the problem that people may experience difficulties with digesting the peel of chickpeas due to its high fiber content and the presence of certain complex carbohydrates, such as oligosaccharides, which can be challenging for the digestive system to break down. The outer skin of chickpeas contains insoluble fiber that, while beneficial for gut health, can cause bloating, gas, and discomfort, particularly for individuals with sensitive digestive systems or conditions such as irritable bowel syndrome (IBS). For these individuals, consuming unpeeled chickpeas may lead to gastrointestinal distress, making it less desirable as a food option. Peeled chickpeas, on the other hand, are easier to digest and are generally better tolerated by a larger population. The removal of the outer skin reduces the fiber content and eliminates some of the complex carbohydrates that contribute to digestive discomfort. As a result, peeled chickpeas allow for smoother digestion and absorption of nutrients, making them a more suitable option for individuals with digestive sensitivities.

The dough is formed by grinding the peeled chickpeas and cooked potatoes into a fine mixture, ensuring a consistent distribution of ingredients. Potatoes add a natural starch content, which enhances the dough's cohesion and contributes to a soft interior that contrasts with the crispy outer coating. The carefully formulated dough mixture provides a balanced nutritional profile, offering plant-based protein and fiber while remaining free from gluten and common allergens.

The product is further enhanced by a dual-layer coating system consisting of a liquid coating made from water and chickpea flour, followed by a dry coating of ground cornflakes. The liquid coating serves as an adhesive layer, ensuring that the dry coating adheres uniformly to the dough surface. This sequential coating process enhances the product's crispiness and prevents the coating from separating during frying and subsequent cooking. The dry coating of ground cornflakes provides an appealing crunchy texture while maintaining a gluten-free profile, making the product suitable for consumers with dietary restrictions.

A key feature of the invention is the pre-frying process, which creates a crust with a color that is darker than the original cornflakes before frying. This darker crust indicates proper caramelization and partial cooking, which enhances the flavor profile and provides an appealing golden appearance. The pre-frying step also offers several functional advantages, such as reducing the final cooking time for consumers, ensuring a consistent texture, and acting as a protective barrier that preserves the moisture of the interior during freezing and storage.

The product is designed to be distributed in frozen form, ensuring extended shelf life while maintaining its taste and texture integrity. Freezing the pre-fried product allows for convenient storage and distribution, making it an ideal choice for both retail and foodservice applications. The final product can be quickly and easily finish-fried, providing a freshly prepared taste and crispy exterior with minimal effort. This feature aligns with the increasing demand for ready-to-cook, health-conscious food solutions that accommodate busy lifestyles without compromising on quality or nutrition.

Overall, the invention offers a highly desirable combination of taste, texture, and convenience. The use of peeled chickpeas ensures a superior dough consistency, while the coating and pre-frying processes contribute to an appealing crispy exterior and soft interior. The product caters to health-conscious consumers seeking allergen-free, plant-based alternatives that are easy to prepare and enjoy, making it a valuable addition to the modern food market. Further, the food product according to the invention has a remarkably high protein content and offers significant advantages in terms of bioavailability. This is primarily due to the unique combination of chickpeas and potatoes, which complement each other nutritionally. Chickpeas are rich in plant-based protein, providing essential amino acids, while potatoes contribute additional amino acids that enhance the overall protein profile. This synergy results in a more complete and easily digestible protein source, making the product highly beneficial for individuals seeking nutritious and plant-based alternatives. The improved bioavailability ensures that the body can efficiently absorb and utilize the nutrients, supporting muscle maintenance, energy production, and overall health.

The mass ratio of peeled, cooked chickpeas to cooked potatoes is typically 2:1. However, variations of this ratio can be made without departing from the core concept of the invention. For example, suitable ratio ranges may fall between 2.75:1 and 1.5:1, 2.5:1 and 1.75:1 or 2.25:1 and 1.85:1, allowing flexibility while maintaining the intended characteristics of the product.

Preferably, the crust of the pre-fried chickpea-potato product is light golden, offering both functional and aesthetic advantages. A light golden color indicates an optimal frying process, ensuring a crispy texture while maintaining a soft interior. It enhances the product's visual appeal and consumer confidence, as it is commonly associated with freshness and proper cooking. Additionally, the light golden crust acts as a protective barrier, helping to retain moisture and prevent freezer burn during storage. This color also ensures that the product is not over-fried, preserving its nutritional properties and making it easy to achieve the desired final crispiness during finish-frying.

Preferably, the pre-fried chickpea-potato product is distributed and preferably also finish-fried in frozen form, which provides several functional and practical advantages. Freezing ensures that the product retains its freshness, texture, and flavor over an extended period, allowing for convenient storage and distribution without the need for preservatives. The frozen form prevents spoilage and microbial growth, making the product suitable for large-scale distribution and long shelf life while maintaining its quality. Additionally, freezing helps preserve the structural integrity of the pre-fried crust, preventing it from becoming soggy or losing its crispness before final preparation. By distributing the product in frozen form, it can be easily transported across various regions without compromising taste or nutritional value.

For consumers, the frozen format offers convenience and flexibility, allowing them to prepare the product at their preferred time without concern for immediate spoilage. Finish-frying the frozen product ensures that it achieves the desired crispiness and golden-brown appearance while providing a freshly prepared taste with minimal effort. This method also allows consumers to control the level of crispiness and customize preparation methods, such as deep-frying, air-frying, or baking, according to their preferences. Furthermore, the frozen format allows for portion control, enabling consumers to prepare only the desired amount at a time, reducing food waste and enhancing convenience. The ability to finish-fry the product from frozen state eliminates the need for thawing, streamlining the preparation process and making it an ideal choice for both home use and commercial food service applications.

According to an embodiment, the cornflakes used in the pre-fried chickpea-potato product are gluten-free, which provides several functional and consumer-related advantages. The use of gluten-free cornflakes ensures that the product is suitable for individuals with gluten intolerance or celiac disease, allowing a wider range of consumers to enjoy it without health concerns. This characteristic aligns with the growing demand for gluten-free food options, catering to health-conscious consumers who prefer to avoid gluten for dietary or lifestyle reasons. Additionally, gluten-free cornflakes contribute to the overall crispiness and texture of the product without compromising on quality or taste. They provide a light, crunchy exterior that enhances the eating experience while maintaining the structural integrity of the coating during storage and preparation. The absence of gluten also helps to reduce the risk of digestive discomfort for those with sensitivities, making the product a more inclusive and versatile option in both home and commercial settings. Furthermore, using gluten-free cornflakes allows the product to be marketed within specialized dietary categories, expanding its appeal to health-focused retail segments and restaurants that cater to gluten-free diets.

According to an embodiment, the dough mixture further comprises olive oil, which provides several functional and sensory advantages. Olive oil enhances the texture of the dough by contributing to a smoother, more pliable consistency, making it easier to shape into predefined forms such as balls or sticks without cracking or becoming too dry. Additionally, olive oil helps improve the binding properties of the dough, ensuring that the chickpea and potato mixture holds together more effectively during processing and cooking. Beyond its structural benefits, olive oil enriches the flavor profile of the product, adding a subtle, natural richness that complements the mild taste of chickpeas and potatoes. Its presence also contributes to a more appealing mouthfeel, preventing the dough from feeling overly starchy or dry after cooking. From a nutritional perspective, olive oil is a source of healthy monounsaturated fats and antioxidants, which align with current consumer trends favoring health-conscious food choices. The inclusion of olive oil also enhances the frying process by promoting even browning and helping to achieve a crispier crust, further improving the overall sensory experience of the final product. Moreover, it aids in moisture retention, preventing the dough from drying out during freezing and storage, thus ensuring that the product remains tender and flavorful after finish-frying.

According to an embodiment, the dough mixture further comprises cornstarch to enhance the binding properties, which provides several functional and practical advantages. Cornstarch acts as an effective binding agent by helping to hold the chickpea and potato mixture together, ensuring that the dough maintains its shape during processing, coating, and frying. This improved structural integrity prevents the dough pieces from breaking apart or becoming too soft, which is especially important during handling, frying, and subsequent freezing. The addition of cornstarch enhances the dough's elasticity and cohesiveness, allowing for a uniform texture that contributes to a consistent mouthfeel in the final product.

Furthermore, cornstarch helps absorb excess moisture from the chickpeas and potatoes, which can otherwise make the dough too sticky or difficult to handle. This moisture control contributes to an optimal dough consistency, making it easier to form predefined shapes such as balls or sticks. The presence of cornstarch in the dough mixture also plays a role in achieving a desirable crispiness in the final product, as it promotes a light, crispy texture when fried, enhancing the overall sensory experience. In addition, cornstarch is a gluten-free ingredient, which aligns with the demand for allergen-free products and broadens the market appeal to consumers with dietary restrictions. The incorporation of cornstarch ultimately improves the product's quality, ensuring better handling, texture, and a more enjoyable eating experience.

According to an embodiment, the dough mixture further comprises baking powder to provide a lighter texture. The addition of baking powder introduces a leavening effect that creates small air pockets within the dough during the cooking process, resulting in a softer and more delicate interior while maintaining the structural integrity of the product. This contributes to an improved mouthfeel, making the product less dense and more enjoyable to eat. The lighter texture achieved through the use of baking powder enhances the overall sensory experience by providing a pleasant contrast between the crispy outer coating and the airy, tender interior. Furthermore, the presence of baking powder helps the dough maintain its shape during processing and frying by ensuring uniform expansion, which can contribute to a more consistent final product. In addition, the use of baking powder allows for a more uniform heat distribution throughout the dough, facilitating efficient cooking and reducing the risk of undercooked or overly dense sections. This improvement in texture also enhances the product's versatility, making it suitable for a wider range of culinary applications, whether served as a snack, appetizer, or meal component.

According to an embodiment, the dough mixture further comprises paprika powder for flavor enhancement, providing both functional and sensory benefits. Paprika powder adds a rich, slightly sweet, and mildly spicy flavor to the chickpea-potato dough, enhancing its overall taste profile without overpowering the natural flavors of the main ingredients. This subtle spice contributes to a more complex and appealing taste experience, making the product more enjoyable for a wide range of consumers. In addition to flavor, paprika powder provides a natural color enhancement, giving the dough a warm, appetizing hue that complements the golden crust after frying. Furthermore, paprika contains natural antioxidants, which can help preserve the freshness of the product by reducing oxidation during storage. The inclusion of paprika also aligns with current consumer preferences for natural and recognizable ingredients, enhancing the product's appeal in the market. Additionally, paprika's mild heat can stimulate the palate, making the product more satisfying without the need for excessive salt or artificial flavor enhancers.

According to an embodiment, the dough mixture and/or the liquid coating further comprises salt and white pepper for seasoning, which enhances both the flavor and overall sensory experience of the pre-fried chickpea-potato product. Salt plays a crucial role in enhancing the natural flavors of the chickpeas and potatoes, bringing out their inherent taste and ensuring a well-balanced flavor profile. It also contributes to the overall mouthfeel of the product by subtly influencing the texture of the dough, making it more palatable and enjoyable. White pepper, on the other hand, adds a mild, yet distinctive, heat and complexity to the flavor, complementing the other ingredients without overpowering them. Its subtle spiciness enhances the taste experience, making the product appealing to a wider range of consumers who prefer a well-seasoned but not overly spicy food option. Additionally, the inclusion of salt and white pepper in the liquid coating ensures an even distribution of seasoning across the entire product, providing consistent flavor in every bite. This uniform seasoning also allows the product to maintain its appeal after finish-frying, ensuring that it delivers a satisfying taste regardless of the preparation method used. Moreover, the seasoning helps to reduce the need for additional condiments or flavor enhancements during consumption, offering a ready-to-eat solution that meets modern consumers' expectations for convenient and flavorful food.

According to an embodiment, the dough pieces are shaped into forms such as balls, sticks, nuggets, patties, or cylinders, each offering specific functional and practical advantages. The variety of shapes allows for versatility in preparation and presentation, making the product suitable for different culinary applications. Ball-shaped pieces provide an appealing bite-sized option that is easy to handle and ideal for snacking, appetizers, or party platters. Stick-shaped forms are convenient for dipping and offer a uniform structure that ensures even cooking and crispiness across the entire surface. Nuggets, being a popular and familiar shape, cater to consumer preferences and provide a satisfying texture with a good balance between the crispy exterior and soft interior. Patties offer a larger, flat surface area that allows for uniform heat distribution during cooking, making them ideal for sandwiches, burgers, or meal accompaniments. Cylindrical shapes provide a compact, dense structure that retains moisture effectively and ensures a consistent bite in every portion.

These shape variations not only enhance the consumer experience but also improve operational efficiency in production and packaging. Uniformly shaped dough pieces facilitate automated processing, portion control, and consistent cooking results, ensuring a high-quality product across all batches. Different shapes also allow for creative presentation, catering to various market segments such as quick-service restaurants, home meal solutions, and catering services. The ability to offer multiple shapes expands the product's appeal to diverse consumer preferences and dietary needs, making it a versatile and convenient option for both individual consumption and large-scale food service.

According to an embodiment, the dough mixture further comprises added nutritional ingredients, such as protein powder, fiber supplements, or vitamin and mineral fortifications, which enhance the overall nutritional profile of the product. The inclusion of protein powder increases the protein content, making the product more suitable for consumers seeking plant-based protein alternatives to support muscle maintenance and overall health. This is particularly beneficial for individuals following vegetarian or vegan diets, as well as those with active lifestyles who require additional protein intake. Fiber supplements contribute to digestive health by promoting a feeling of fullness and supporting regular bowel movements, which can help consumers maintain a balanced diet and support weight management goals. The addition of vitamins and minerals further enhances the product's appeal by providing essential nutrients that may be lacking in a typical diet, such as iron, calcium, and B vitamins, which are crucial for energy production, bone health, and overall well-being. These fortifications make the product a more attractive option for health-conscious consumers looking for convenient and nutritious food choices without compromising on taste or texture. Additionally, incorporating these ingredients into the dough mixture ensures an even distribution of nutrients throughout the product, providing consistent benefits in every serving while maintaining the desirable sensory attributes such as taste, texture, and mouthfeel.

The method according to the invention for preparing pre-fried chickpea-potato products involves a series of steps that ensure the production of a high-quality, nutritious, and convenient food product. Grinding the peeled, cooked chickpeas and cooked potatoes into a dough provides a smooth, homogeneous mixture that enhances the texture and mouthfeel of the final product. The peeling of the chickpeas is particularly beneficial as it removes the outer skins, which can contribute to a grainy texture, ensuring a finer consistency and improved binding properties. The combination of chickpeas and potatoes results in a dough that is rich in plant-based protein and carbohydrates, offering a balanced nutritional profile while providing a soft, moist interior.

Forming the dough into pieces with predefined shapes, such as balls or sticks, allows for uniform cooking and ease of handling during processing, packaging, and preparation. These consistent shapes ensure even coating and frying, which contribute to a predictable final texture and appearance. The coating process, which involves applying a liquid coating comprising water and chickpea flour followed by a dry coating of ground cornflakes, plays a crucial role in achieving the desired crispiness and flavor. The liquid coating acts as a binding agent, ensuring that the dry coating adheres uniformly to the surface of the dough pieces, while also contributing to the overall moisture retention of the product. The dry coating of ground cornflakes provides a satisfying crunch, enhancing the sensory experience while maintaining a gluten-free profile, which makes the product suitable for individuals with dietary restrictions.

The pre-frying step is essential to achieving a partially cooked product with a crust that is darker in color than the original cornflakes, indicating proper caramelization and an initial crisp texture. Pre-frying not only enhances the visual appeal of the product but also serves functional purposes by creating a barrier that helps retain the internal moisture during storage and freezing. This step reduces the final cooking time for the consumer, offering a convenient solution for quick meal preparation while ensuring that the final product attains the desired level of crispiness upon finish-frying. Additionally, pre-frying helps in stabilizing the coating, preventing it from falling off during subsequent handling and cooking.

Overall, the method ensures a consistent, high-quality product that is easy to prepare, has a long shelf life, and retains its appealing texture and flavor when cooked. It meets the growing consumer demand for healthy, plant-based, and gluten-free options that offer convenience without compromising on taste or nutrition. The carefully designed process results in a product that is suitable for both home consumption and food service applications, providing a versatile and enjoyable culinary experience.

Cooling the pre-fried dough pieces to room temperature is essential to maintaining product quality and safety. It allows excess steam to escape, preventing condensation that could lead to sogginess during freezing. This step ensures the crust remains crisp and intact while also preventing thermal shock, which could otherwise compromise the texture and structure of the coating. Cooling helps achieve uniform freezing, reducing ice crystal formation that can affect taste and appearance. Additionally, it enhances food safety by minimizing bacterial growth and facilitates easier handling during packaging, ensuring the dough pieces retain their shape and visual appeal.

An embodiment comprises the further method step of freezing the cooled dough pieces for further distribution, which provides several functional and practical advantages. Freezing preserves the freshness, texture, and flavor of the pre-fried chickpea-potato products by halting microbial activity and enzymatic reactions that could lead to spoilage. This ensures that the product remains safe for consumption over an extended period without the need for artificial preservatives. By freezing the dough pieces after they have cooled, condensation is minimized, which helps prevent the formation of ice crystals that could negatively impact the texture and cause sogginess during storage and re-heating. The frozen state also facilitates efficient and hygienic distribution, as it allows the product to be transported over long distances without compromising its quality or sensory attributes.

Freezing further provides convenience for both retailers and consumers by offering a ready-to-use product that can be stored for extended periods and prepared at a time that suits their needs. This enhances the versatility of the product, allowing consumers to finish-fry it directly from frozen without the need for thawing, thus saving time and effort. For food service providers, frozen dough pieces enable better inventory management and reduce food waste by allowing portions to be used as needed while maintaining consistent quality across servings. Additionally, freezing helps lock in the desirable characteristics of the product, such as its crispy coating and soft interior, ensuring that these attributes are retained even after prolonged storage.

The freezing step also supports bulk production, allowing manufacturers to produce large quantities in advance and distribute them according to market demand without experiencing degradation in quality. Furthermore, frozen products are easier to package and stack efficiently, optimizing storage space during transportation and retail display. Overall, freezing the cooled dough pieces offers a reliable and efficient means of maintaining the product's integrity, extending its shelf life, and providing consumers with a convenient, high-quality food option that aligns with modern dietary and lifestyle preferences.

In an embodiment, the method step of freezing the cooled dough pieces for further distribution includes the method step of shock freezing the balls at a temperature of approximately at least -18 °C for a period sufficient to preserve texture and freshness. Shock freezing rapidly lowers the temperature of the product, which helps to preserve its structural integrity and sensory qualities. By freezing the dough pieces quickly, the formation of large ice crystals within the product is minimized, preventing damage to the cellular structure and maintaining the desired texture upon thawing and preparation. This rapid freezing process locks in moisture, preventing dehydration and ensuring that the product remains soft and flavorful inside while retaining its crispy coating after finish-frying. Additionally, shock freezing contributes to extending the shelf life of the product without the need for artificial preservatives, making it a more natural and appealing option for health-conscious consumers. The low freezing temperature effectively inhibits microbial growth and enzymatic reactions, ensuring food safety and quality during storage and transportation. This method also enhances convenience for distribution, allowing the product to be stored, shipped, and sold in frozen form without compromising its quality. For the end consumer, shock freezing provides the benefit of a ready-to-use product that can be finish-fried directly from frozen, reducing preparation time while ensuring a consistently high-quality eating experience.

An embodiment of the invention comprises the method step of packaging the frozen dough pieces in airtight, vacuum-sealed packaging to prevent freezer burn and maintain quality. This packaging method offers several functional and practical advantages that enhance the product's shelf life and overall consumer experience. By using airtight, vacuum-sealed packaging, the exposure of the product to air and moisture is minimized, which effectively prevents the formation of ice crystals that can lead to freezer burn. Freezer burn occurs when moisture evaporates from the product, resulting in dehydration, texture degradation, and off-flavors, all of which can negatively impact the sensory qualities of the product. The vacuum-sealing process removes excess air from the packaging, ensuring that the dough pieces remain fresh and retain their original taste, texture, and nutritional value over an extended period.

Furthermore, vacuum-sealed packaging provides an additional layer of protection against contamination, preserving the hygienic integrity of the product throughout storage and transportation. This is particularly important for frozen food products, as they are often subjected to temperature fluctuations and handling during distribution. The airtight seal also helps in maintaining the structural integrity of the coated dough pieces, preventing breakage or damage that could compromise the product's visual appeal and consistency when prepared by the end consumer.

Another significant advantage of vacuum-sealed packaging is its contribution to convenience for both retailers and consumers. The packaging is typically compact and space-efficient, allowing for optimized storage in both retail freezers and home appliances. Consumers benefit from the ability to store the product for longer periods without concerns about spoilage, making it an ideal option for meal planning and quick preparation. Additionally, the clear and secure packaging allows for easy identification of the product, enhancing its marketability and appeal.

By incorporating vacuum-sealing technology, the invention ensures that the frozen chickpea-potato product remains in peak condition until it is ready for consumption. This method not only enhances the product's durability and shelf life but also provides a premium quality food experience that meets consumer expectations for freshness, taste, and convenience.

In an embodiment, the method step of pre-frying the coated dough pieces such that they comprise a crust the color of which is darker than the color of the cornflakes before frying comprises frying the coated dough pieces for 30 seconds to 2 minutes at a temperature between 160 °C and 180 °C. This specific frying duration and temperature range have been carefully selected to achieve an optimal balance between texture, flavor, and appearance. Frying within this time frame ensures that the coated dough pieces develop a crispy and uniform crust without becoming overly hard or absorbing excessive amounts of oil. The temperature range of 160 °C to 180 °C allows for efficient cooking of the outer coating while maintaining the integrity of the dough inside, preventing it from becoming too dry or overcooked. Additionally, frying at this controlled temperature range promotes the Maillard reaction, which enhances the flavor complexity and results in the desirable golden-brown appearance of the crust. The defined time range provides flexibility for achieving varying levels of crispiness depending on the desired end product while ensuring consistent quality across production batches. Moreover, the rapid pre-frying process stabilizes the coating, securing it to the dough surface and preventing it from detaching during subsequent freezing, storage, and finish-frying. This method also contributes to the product's convenience, as it reduces the final cooking time required by the consumer while preserving a freshly prepared taste and texture. The carefully controlled pre-frying step further aids in maintaining the product's moisture content, preventing excessive drying during freezing and reheating. Ultimately, this embodiment ensures that the product delivers an appealing texture, visual attractiveness, and a satisfying sensory experience, catering to the expectations of health-conscious and convenience-driven consumers.

In the following, an embodiment of the invention is described with full details.

An example of the invention involves the preparation of a pre-fried chickpea-potato product based on the recipe provided. The process begins with the preparation of the dough mixture, which consists of 1000 grams of cooked, peeled chickpeas and 500 grams of cooked potatoes. The peeling of the chickpeas is a crucial step as it enhances the texture and binding properties of the dough, resulting in a smoother and more homogeneous consistency. The chickpeas are passed through a meat grinder or food processor to achieve a fine texture, ensuring even distribution within the dough. The cooked potatoes are then integrated with the ground chickpeas and processed together until a smooth and uniform dough is obtained. This combination provides an optimal balance of plant-based protein and carbohydrates, delivering a nutritious and satisfying product.

To enhance the dough's structure and flavor profile, additional ingredients are incorporated, including 25 milliliters of olive oil, which contributes to a moist and rich texture, 62.5 grams of cornstarch to improve the binding properties, 12.5 grams of baking powder to introduce a light and airy texture, and 12.5 grams each of paprika powder and salt, along with 2 grams of white pepper for seasoning. These ingredients are thoroughly mixed to create a homogeneous and pliable dough that can be easily shaped and processed further.

Once the dough is prepared, it is portioned into individual pieces using a portioning tool or by hand, ensuring uniform sizes of approximately 20 grams per piece. The dough is shaped into predefined forms, such as balls or sticks, which allows for consistent frying and packaging. The uniform sizing ensures even cooking, providing a consistent texture and appearance in the final product.

The dough pieces then undergo a two-step coating process. First, a liquid coating is prepared by mixing 500 milliliters of water with 70 grams of chickpea flour, 3.5 grams of salt, and 9 grams of paprika powder until a smooth and lump-free batter is achieved. Each dough piece is dipped into the liquid coating, which ensures an even application and provides an adhesive layer for the subsequent dry coating. Immediately after, the dough pieces are rolled in a dry coating comprising 250 grams of ground gluten-free cornflakes. This dry coating provides a crispy outer texture and ensures the product remains gluten-free, catering to dietary restrictions and consumer preferences.

Following the coating process, the dough pieces are pre-fried in plant-based oil at a temperature of 175 °C for 1 minute. This pre-frying step is critical as it forms a light golden crust, which is darker than the original color of the cornflakes, ensuring that the coating is properly set while maintaining the integrity of the interior dough. The pre-frying process also enhances the texture, offering a crispy exterior while keeping the inside soft and moist. After frying, the dough pieces are placed on a cooling rack and allowed to cool at room temperature until fully steamed off to avoid condensation during freezing, which helps maintain the quality and prevents freezer burn.

The cooled product is then subjected to shock freezing at -18 °C for 1 hour to preserve its freshness and texture. This rapid freezing process ensures that the product retains its structure and taste, allowing it to be stored for an extended period without degradation. Once frozen, the product is packaged in airtight, vacuum-sealed packaging, which prevents freezer burn and maintains the product's quality during storage and transportation.

The final product is intended to be distributed in frozen form and can be finish-fried by the consumer to achieve the desired crispiness and golden-brown color. The frozen format allows for convenient storage and quick preparation, making it suitable for both home use and commercial food service applications. The finish-frying process enhances the crust's texture and ensures that the product is served hot and crispy, providing a satisfying eating experience.

Overall, this example of the invention highlights the careful selection of ingredients and processing steps that contribute to the superior quality of the pre-fried chickpea-potato product. The peeling of the chickpeas, the balanced dough formulation, and the optimized frying and freezing methods all contribute to a product that is nutritious, convenient, and appealing to health-conscious consumers.

To allow flexibility in the recipe while maintaining the desired texture and taste, the ingredient amounts for the main dough can be adjusted within certain ranges. The amount of cooked, peeled chickpeas can vary between 900 grams and 1100 grams. Increasing the amount results in a firmer structure and a stronger chickpea flavor, while decreasing it makes the dough softer. The amount of cooked potatoes can range from 400 grams to 600 grams. More potatoes provide a softer texture and better binding, while fewer potatoes result in a firmer, denser dough. Olive oil can be adjusted between 20 milliliters and 35 milliliters. A higher amount improves moisture retention and richness, whereas a lower amount may make the texture drier. The amount of cornstarch can vary between 50 grams and 75 grams, with more cornstarch improving the dough's cohesion and crispiness, while a lower amount results in a softer texture. Baking powder can be used in amounts ranging from 10 grams to 15 grams. It contributes to a lighter texture by introducing air pockets; too much baking powder may affect the dough's structure, leading to excessive expansion. Paprika powder can be adjusted between 10 grams and 15 grams, primarily for flavor and color enhancement. The amount of salt can range from 10 grams to 15 grams, which is essential for enhancing the flavor without making the product too salty. The amount of white pepper can vary between 1.5 grams and 2.5 grams, providing a subtle spice and aroma without overpowering the other ingredients. These flexible ingredient ranges allow adjustments based on consumer preferences, dietary requirements, and variations in ingredient quality, while ensuring the final product maintains its intended characteristics in terms of taste, texture, and consistency.

## Claims

1. A pre-fried chickpea-potato product, comprising:
a dough mixture including peeled, cooked chickpeas and cooked potatoes, wherein the chickpeas and potatoes are ground to form a dough,
a liquid coating comprising water and chickpea flour, and
a dry coating comprising ground cornflakes,
wherein the dough is formed into a dough piece,
the dough piece is coated with the liquid coating and the dry coating and
the coated dough piece is pre-fried such that it comprises a crust the color of which is darker than the color of the cornflakes before frying.

2. The pre-fried chickpea-potato product according to claim 1, wherein the cornflakes are gluten-free.

3. The pre-fried chickpea-potato product according to any one of the previous claims, wherein the dough mixture further comprises olive oil.

4. The pre-fried chickpea-potato product according to any one of the previous claims, wherein the dough mixture further comprises cornstarch.

5. The pre-fried chickpea-potato product according to any one of the previous claims, wherein the dough mixture further comprises baking powder.

6. The pre-fried chickpea-potato product according to any one of the previous claims, wherein the dough mixture further comprises paprika powder.

7. The pre-fried chickpea-potato product according to any one of the previous claims, wherein the dough mixture and/or the liquid coating further comprises salt and white pepper.

8. The pre-fried chickpea-potato product according to any one of the previous claims, wherein dough pieces are shaped into a form of a ball, a stick, a nugget, a patty, or a cylinder.

9. The pre-fried chickpea-potato product according to any one of the previous claims, wherein the dough mixture further comprises added nutritional ingredients, such as protein powder, fiber supplements, or vitamin and mineral fortifications.

10. A method for preparing pre-fried chickpea-potato products, comprising the method steps of:
grinding peeled, cooked chickpeas and cooked potatoes into a dough,
forming the dough into dough pieces into a shape,
coating the dough pieces with a liquid coating comprising water and chickpea flour,
applying a dry coating consisting of ground cornflakes,
pre-frying the coated dough pieces such that they comprise a crust the color of which is darker than the color of the cornflakes before frying.

11. The method according to claim 10, comprising the further method step of
cooling the pre-fried dough pieces to room temperature.

12. The method according to claim 11, comprising the further method step of
freezing the cooled dough pieces for further distribution.

13. The method according to claim 12, wherein the method step of freezing the cooled dough pieces for further distribution includes the method step of
shock freezing the balls at a temperature of approximately at least -18 °C for a period sufficient to preserve texture and freshness.

14. The method according to any one of claims 10 to 13, further comprising the method step of
packaging the frozen dough pieces in airtight, vacuum-sealed packaging to prevent freezer burn and maintain quality.

15. The method according to any one of claims 10 to 14, wherein the method step of pre-frying the coated dough pieces such that they comprise a crust the color of which is darker than the color of the cornflakes before frying comprises the method step of
frying the coated dough pieces for 30 seconds to 2 minutes at a temperature between 160 °C and 180 °C.
